# EUROPÄISCHE PATENTSCHRIFT

(11) **EP 2 334 946 B1**
(45) Veröffentlichungstag und Bekanntmachung des Hinweises auf die Patenterteilung: **29.03.2017**
(21) Anmeldenummer: 09778855.8
(22) Anmeldetag: 07.10.2009
(51) Int. Cl.: F16D 65/56, B61H 15/00, B60T 17/08, F16D 65/14

(54) **PNEUMATISCHER BREMSZYLINDER**
PNEUMATIC BRAKE ACTUATOR
ACTIONNEUR PNEUMATIQUE DE FREINAGE

(30) Priorität: 15.10.2008 DE 102008051679
(43) Veröffentlichungstag der Anmeldung: 22.06.2011
(73) Patentinhaber: KNORR-BREMSE Systeme für Schienenfahrzeuge GmbH, 80809 München (DE)
(72) Erfinder: ELSTORPFF, Marc-Gregory, 80638 München (DE); EBNER, Christian, 86161 Augsburg (DE); MATHIEU, Michael, 82178 Puchheim (DE); FUDERER, Erich, 82256 Fürstenfeldbruck (DE)
(74) Vertreter: Mattusch, Gundula
(86) Internationale Anmeldenummer: PCT/EP2009/007186
(87) Internationale Veröffentlichungsnummer: WO 2010/043326

(56) Entgegenhaltungen:
- EP-A1- 0 224 787
- US-A- 4 364 305

## Beschreibung

Die Erfindung betrifft einen pneumatischen Bremszylinder nach dem Oberbegriff von Anspruch 1.

Ein pneumatischer Bremszylinder dieser Gattung wurde im Dokument EP-A-0224787 beschrieben.

Derartige Bremszylinder werden unter anderem bei Schienenfahrzeugen eingesetzt. Dort werden sie häufig zur Betätigung einer Bremszange verwendet, mit deren Hilfe Bremsbeläge an eine Bremsscheibe angepresst werden. Dabei soll der Kolbenhub, unabhängig vom Verschleiß der Bremsbeläge immer in etwa gleich groß sein. Zu diesem Zweck ist üblicherweise eine Nachstelleinrichtung vorgesehen, die eine in einem Kolbenrohr geführte Spindel und eine Verstellmutter aufweist. Durch eine Feder wird eine Axialkraft auf die Spindel ausgeübt, die versucht die Spindel aus der Nachstelleinrichtung herauszuziehen. Da Spindel und Verstellmutter über ein nicht selbst hemmendes Gewinde miteinander in Verbindung stehen, wirkt durch die Federkraft ein Drehmoment auf die Verstellmutter.

Während des normalen Bremsvorgangs wird die Verstellmutter nun so blockiert, dass nur eine Linearbewegung zusammen mit der Spindel in Richtung der Mittel-Längsachse des Bremszylinders, nicht aber eine Drehbewegung zugelassen wird. Erst für den Nachstellvorgang, wenn ein gewisser Verschleiß der Bremsbeläge stattgefunden hat, darf eine Drehung der Verstellmutter zugelassen werden. Zur Kontrolle der Drehbewegung der Verstellmutter während der Einleitung eines Bremsvorgangs wird eine sogenannte Steuerhülse eingesetzt, die innerhalb des Kolbenrohrs auf der Spindel verschiebbar angeordnet ist. Das Drehmoment wird von der Steuerhülse über angeformte Sperrarme, die in offenen Schlitzen des Kolbenrohrs geführt sind, auf das Kolbenrohr übertragen. Während des Bremsvorgangs wird dagegen das Drehmoment der Verstellmutter direkt auf das Kolbenrohr übertragen.

Das Kolbenrohr ist fest mit dem Kolben verbunden, so dass das Drehmoment von diesem auf den Kolben übertragen wird. Über Führungsstifte, die an dem Kolben angebracht sind und die mit entsprechenden Führungen im Gehäuse korrespondieren, wird das Drehmoment in das Gehäuse eingeleitet. Diese kraftübertragende Verbindung zwischen Kolben und Kolbenrohr führt zu einem aufwändigen und teuren Bauteil, das schwer zu montieren ist. Auch bei einer Überholung des pneumatischen Zylinders sind Demontage, Montage und die zu ersetzenden Bauteile relativ teuer.

Bei einem anderen bekannten Bremszylinder stützen sich die Sperrarme der Steuerhülse an einem in den Deckel des Zylinders eingeschraubten Anschlagring ab. Hier wird das auf die Verstellmutter wirkende Drehmoment nicht nur in der Ruhestellung sondern auch während des Bremsvorgangs über die Sperrarme in das Gehäuse des Bremszylinders übertragen, da sich auch das Kolbenrohr über die offenen Schlitze an den Sperrarmen abstützt. Die Steuerhülse und die angeformten Sperrarme müssen daher sehr massiv und stabil ausgebildet sein.

Bei beiden vorbekannten Bremszylindern kann die Nachstelleinrichtung aufgrund der an die Steuerhülse angeformten Sperrarme nicht als Einheit vormontiert werden.

Der Erfindung liegt die Aufgabe zugrunde, einen pneumatischen Bremszylinder nach dem Oberbegriff von Anspruch 1 so auszugestalten, dass die Kosten für die Bauteile gesenkt werden können und die Montage - sowohl bei der Herstellung als auch bei einer Überholung des Bremszylinders - verbilligt werden kann.

Gelöst wird die Aufgabe gemäß der Erfindung durch einen pneumatischen Bremszylinder mit den Merkmalen von Anspruch 1. Vorteilhafte Weiterbildungen und Ausgestaltungen ergeben sich aus den Unteransprüchen.

Dadurch, dass ein von der Verstellmutter auf das Kolbenrohr aufgebrachtes Drehmoment von dem Kolbenrohr direkt in fest mit dem Gehäuse verbundene Elemente eingeleitet wird, muss keine besonders massive Steuerhülse eingesetzt werden. Weiterhin ist weder ein in den Deckel des Gehäuses eingeschraubter Anschlagring nötig noch werden Führungsstifte gebraucht, die an dem Kolben angebracht sind und mit entsprechenden Führungen im Gehäuse korrespondieren. Die Nachstelleinrichtung kann als Einheit vormontiert werden, da eine Steuerhülse ohne Sperrarme eingesetzt werden kann.

Die fest mit dem Gehäuse verbundenen Elemente sind vorteilhaft als Gleitsteine ausgebildet. Es ist normalerweise ausreichend zwei solcher Gleitsteine vorzusehen und mit dem Gehäuse fest zu verschrauben. Diese Verbindung gewährleistet während des Bremsvorgangs eine sichere Einleitung des Drehmoments von dem Kolbenrohr direkt in das Gehäuse.

Da das Kolbenrohr axial in dem Gehäuse verschiebbar gelagert sein muss, muss auch die Verbindung zwischen den fest mit dem Gehäuse verbundenen Gleitsteinen und dem Kolbenrohr entsprechend ausgestaltet sein. Zu diesem Zweck gleiten die Gleitsteine in Langlöchern des Kolbenrohrs. Bei Verwendung der aus dem Stand der Technik bekannten Steuerhülse mit den angeformten Sperrarmen, über die das Drehmoment von dem Kolbenrohr in das Gehäuse übertragen wurde, waren in dem Kolbenrohr offene Längsschlitze nötig um die Steuerhülse überhaupt montieren zu können. Die nun möglichen nach oben und unten geschlossenen Langlöcher gewährleisten eine wesentlich höhere Stabilität und Verformungssicherheit.

Um das Drehmoment von dem Kolbenrohr in das Gehäuse zu übertragen, muss nicht mehr der Kolben und daran angebrachte Führungsstifte verwendet werden. Auf eine Verbindung zwischen Kolben und Kolbenrohr kann daher vollkommen verzichtet werden. Der Kolben ist daher lose in den Zylinder eingelegt und weist keine feste Verbindung mit dem Kolbenrohr auf.

Da das Drehmoment erfindungsgemäß direkt von dem Kolbenrohr auf die mit dem Gehäuse verschraubten Gleitsteine übertragen wird, muss kein Drehmoment über den Kolben übertragen werden. Die von dem Kolben aufzunehmenden Kräfte sind folglich auf Druckkräfte in Axialrichtung beschränkt. Der Kolben kann daher als kostengünstiges Tiefziehteil gefertigt sein. Die geforderte Stabilität wird von einem Tiefziehteil aus Stahl erreicht.

In vorteilhafter Weise ist auf den Rand des Kolbens ein Dichtring aufvulkanisiert. Im Gegensatz zu einem Dichtring der mit Hilfe eines einvulkanisierten Stahlrings auf dem Kolben befestigt ist, wird die Montage sowohl bei der Herstellung des Bremszylinders als auch bei der Überholung des Bremszylinders erheblich vereinfacht, wodurch sich die Montagekosten reduzieren lassen. Es kann bei der Überholung des Bremszylinders in einfacher Weise der komplette Kolben getauscht werden.

Vorteilhaft weist die Verstellmutter an einer Stirnseite eine schräge Außenverzahnung auf. Dadurch wird eine große Eingriffsfläche gewährleistet. Auch bewirkt die Schrägstellung der Außenverzahnungen gleichzeitig eine Zentrierung.

Während des Bremsvorgangs muss das auf die Verstellmutter wirkende Drehmoment in das Kolbenrohr eingeleitet werden. Das Kolbenrohr weist zu diesem Zweck eine Kolbenrohrverzahnung auf, die mit der Außenverzahnung der Verstellmutter in Eingriff bringbar ist. Die Kolbenrohrverzahnung ist als schräge Innenverzahnung ausgeführt, so dass die Kolbenrohrverzahnung vollständig in die Verzahnung der Verstellmutter eingreifen kann.

In dem Kolbenrohr ist auch eine Steuerhülse vorgesehen. Über diese Steuerhülse soll bei der Einleitung des Bremsvorgangs das auf die Verstellmutter wirkende Drehmoment in das Gehäuse eingeleitet werden.

Zu diesem Zweck greifen die Gleitsteine mit ihrem freien Ende in Gleitkanäle der Steuerhülse ein. Es sind auf diese Weise keine angeformten Sperrarme notwendig. Die Gleitsteine erfüllen sowohl die Aufgabe, das Drehmoment des Kolbenrohrs als auch das Drehmoment der Steuerhülse in das Gehäuse einzuleiten. Sie ragen hierzu durch die in dem Kolbenrohr vorgesehenen Langlöcher und stehen auf diese Weise gleichzeitig mit dem Kolbenrohr und der Steuerhülse in Verbindung.

Die Gleitkanäle der Steuerhülse sind so dimensioniert, dass sie als Anschlag für die Gleitsteine wirken und eine Axialbewegung der Steuerhülse beschränken. Die zugelassene Gleitstrecke der Steuerhülse entspricht dabei dem Abstand der Bremsbeläge zu der Bremsscheibe plus der elastischen Verformung der die Bremskraft übertragenden Teile zwischen dem Bremszylinder und den Bremsbelägen.

Die Steuerhülse ist vorteilhaft als Verbundteil mit einer Gleithülse aus Kunststoff und einem eingespritzten Kupplungsring aus Metall gefertigt. Die Gleitkanäle sind in der Gleithülse vorgesehen. Die Verwendung von Kunststoff ist aus Stabilitätsgründen ausreichend, da an diese Steuerhülse keine Sperrarme angeformt sind, die das Drehmoment von dem Kolbenrohr auf das Gehäuse übertragen müssen. Die Herstellkosten für die Steuerhülse können so gegenüber dem bisher üblichen Kokillenguss abgesenkt werden. Der metallische Kupplungsring kann beispielsweise als Stahl-Fließpressteil ausgeführt sein. Die Verwendung von Kunststoff für die Gleithülse hat sich ebenfalls als sehr preisgünstig herausgestellt. Auch konnte das Gewicht des pneumatischen Bremszylinders durch die Verwendung dieser Steuerhülse verringert werden.

Der Kupplungsring weist an seinem freien Ende eine schräge Innenverzahnung auf, die mit der Außenverzahnung der Verstellmutter in Eingriff bringbar ist. Die Herstellung des Kupplungsrings als Stahl-Fließpressteil ermöglicht die kostengünstige Herstellung einer sehr feinen und präzisen Verzahnung. Bei der Aufnahme des von der Verstellmutter über die Innenverzahnung aufgebrachten Drehmoments wirkt der Kunststoff der Gleithülse stark dämpfend. Hierdurch wird der Verschleiß der Verzahnung, trotz des höheren Feinheitsgrades, gegenüber der Steuerhülse aus Kokillenguss reduziert. Auch ergibt sich beim Eingriff der schrägen Innenverzahnung der Steuerhülse in die schräge Außenverzahnung der Verstellmutter wieder eine zentrierende Wirkung, die den möglichst vollflächigen Eingriff der beiden Verzahnungen gewährleistet.

Weitere Einzelheiten und Vorteile der Erfindung ergeben sich aus der Beschreibung eines Ausführungsbeispiels, das anhand der Zeichnung eingehend erläutert wird.

Es zeigt:
- Fig. 1: einen Schnitt durch einen erfindungsgemäßen pneumatischen Bremszylinder,
- Fig. 2 und 3: Detaildarstellungen von dem in Fig. 1 gezeigten Bremszylinder,
- Fig. 4: eine Ansicht eines geschlossenen Kolbenrohrs mit eingesetzten Gleitsteinen,
- Fig. 5: die Darstellung aus Fig. 4, bei der das Kolbenrohr, die Verstellmutter und die Kolbenrückdruckfeder aufgeschnitten wurden und
- Fig. 6: einen Schnitt durch die Darstellung aus Fig. 4.

Die Befestigungen 21 für eine Bremszange befinden sich zum einen an dem Joch 20 und zum anderen an dem Gehäuse 19, welches aus einem Zylinder 19a und einem Deckel 19b zusammengesetzt ist. Zum Betätigen der Bremse muss die hier nicht dargestellte Bremszange auseinander gedrückt werden, dass bedeutet, dass der Abstand zwischen dem Joch 20 und dem Gehäuse 19 vergrößert werden muss.

In dem Gehäuse 19 ist der Kolben 1 vorgesehen. Durch den Kolben 1 und den Zylinder 19a des Gehäuses 19 wird der Druckraum 17 gebildet. Der Druckluftanschluss, über den Druckluft dem Druckraum 17 zugeführt wird, ist in dieser Darstellung nicht sichtbar. Von dem Kolben 1 wird das Kolbenrohr 23 betätigt. Der Kolben 1 ist jedoch nicht fest mit dem Kolbenrohr 23 verbunden sondern lose in den Bremszylinder eingelegt. Die Betätigung des Kolbenrohrs 23 erfolgt lediglich über eine ringförmige, konisch ausgebildete Anlagefläche, mit der der Kolben 1 auf einen mit dem Kolbenrohr 23 verschraubten Federteller 11 drückt.

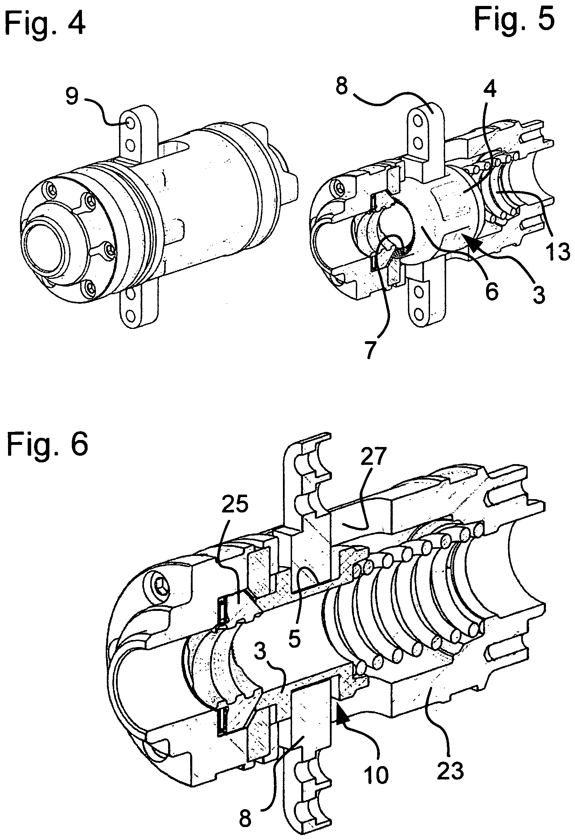

In dem Kolbenrohr 23 sind Langlöcher 27 (s. Fig. 6) vorgesehen, durch die sich Gleitsteine 8 erstrecken, die mit dem Gehäuses 19 verschraubt sind. Durch diese Maßnahme wird eine Verdrehung des Kolbenrohrs 23 gegenüber dem Gehäuse 19 verhindert, eine Längsverschiebung des Kolbenrohrs 23 dagegen zugelassen. Bei der Längsverschiebung wird das Kolbenrohr 23 durch die ringförmigen Gleitbänder 16 an der Innenwand des Gehäuses 19 abgestützt. Der Kolben 1 und das Kolbenrohr 23 werden durch die Kolbenrückdruckfeder 12, die sich an dem Deckel 19a des Gehäuses 19 und dem Federteller 11 des Kolbenrohrs 23 abstützt, in ihrer Ruhelage gehalten.

In dem Kolbenrohr 23 befindet sich die Spindel 24. Durch die Verstellmutter 25 wird die Spindel 24 in ihrer Position kontrolliert. Verstellmutter 25 und Spindel 24 stehen über ein nicht selbsthemmendes Gewinde miteinander in Verbindung, so dass eine Kraft in Richtung der Längsachse der Spindel 24 ein Drehmoment auf die Verstellmutter 25 ausübt. Diese Kraft wird auf die Spindel 24 von der Kegelfeder 28 ausgeübt, die sich an dem Joch 20 und dem Kolbenrohr 23 abstützt. Die Kegelfeder 28 übt somit eine Kraft aus, die versucht die Spindel 24 aus dem Kolbenrohr 23 herauszuziehen.

In dem Kolbenrohr 23 ist eine Steuerhülse 3 vorgesehen. Diese Steuerhülse 3 ist als Verbundteil aufgebaut, wobei ein Kupplungsring 6 (s. Fig. 5) mit einer Gleithülse 4 verbunden wurde. Der Kupplungsring 6 ist als Stahl-Fließpressteil ausgeführt. Die freie Stirnseite des Kupplungsrings 6 ist mit einer schrägen Innenverzahnung 7 versehen. In die Gleithülse 4 sind zwei gegenüberliegende Gleitkanäle 5 eingearbeitet. In diese Gleitkanäle 5 greifen die Gleitsteine 8 ein. Die Breite der Gleitsteine 8 ist exakt an die Breite der Gleitkanäle 5 angepasst, so dass bei einer Fixierung der Gleitsteine 8 keine Drehbewegung der Steuerhülse 3 möglich ist. Um die Gleitsteine 8 fixieren zu können, sind Befestigungsbohrungen 9 (s. Fig. 4) vorgesehen, die zur Aufnahme von Schrauben dienen. Die Längsausdehnung der Gleitkanäle 5 ist so bemessen, dass beim Eingreifen der Gleitsteine 8 der Einstellhub 10 (s. Fig. 6) verbleibt. Die Bedeutung des Einstellhubs 10 wird weiter unten bei der Funktionsbeschreibung des Bremszylinders näher erläutert.

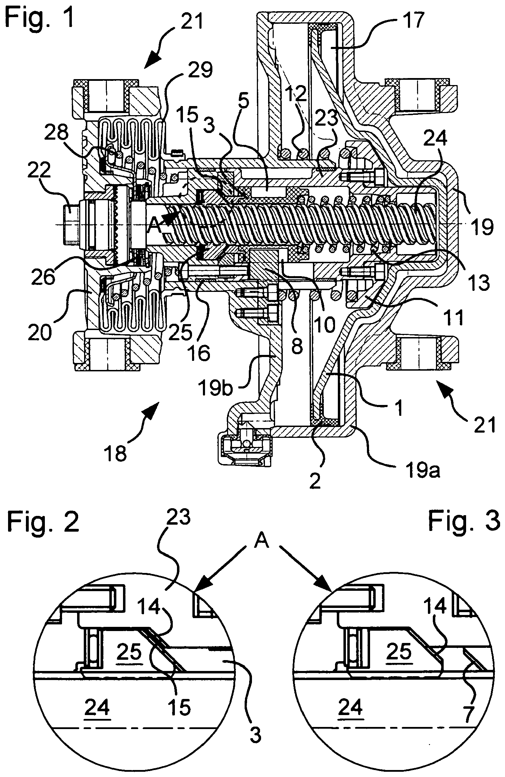

Die Verstellmutter 25 weist an ihrer schrägen Stirnseite eine Außenverzahnung 14 auf (siehe insbesondere Fig. 2 und 3, die das in Fig. 1 mit A bezeichnete Teil vergrößert und in verschiedenen Arbeitszuständen darstellen). In Lösestellung der Bremse ist die Innenverzahnung 7 der Steuerhülse 3 mit der Außenverzahnung 14 der Verstellmutter 25 in Eingriff. Die Steuerhülse 3 ist über die Gleitsteine 8, die mit dem Gehäuse 19 verschraubt sind, an einer Verdrehung gehindert. Durch den Eingriff der Innenverzahnung 7 der Steuerhülse 3 mit der Außenverzahnung 14 der Verstellmutter 25 wird diese ebenfalls an einer Verdrehung gehindert. Die Steuerhülse 3 wird über die Verriegelungsfeder 13 vorgespannt, die sich an der Steuerhülse 3 und an dem Kolbenrohr 23 abstützt. Mit Hilfe der Tellerfeder 26 wird ein mit der Spindel 24 verbundener Zahnkranz in eine Verzahnung des Jochs 20 gedrückt, so dass eine Drehung der Spindel 24 gegenüber dem Joch 20 verhindert wird.

In den Figuren 4 bis 6 ist eine vormontierte Nachstelleinheit gezeigt. Die Nachstelleinheit besteht im Wesentlichen aus dem Kolbenrohr 23, der Verstellmutter 25, der Steuerhülse 3 und der Verriegelungsfeder 13. Die ebenfalls gezeigten lose eingelegten Gleitsteinen 8 gehören nicht zu der vormontierten Nachstelleinheit und werden erst nach der Montage der Nachstelleinheit in den Bremszylinder eingesetzt.

Bei offenem Gehäuse 19 wird die komplett vormontierte Nachstelleinheit in den Deckel 19b eingeführt. Erst wenn sich die Nachstelleinheit in der richtigen Position befindet, werden die Gleitsteine 8 durch die Langlöcher 27 des Kolbenrohrs 23 in die Gleitkanäle 5 der Steuerhülse 3 eingelegt und mit Hilfe von Schrauben an dem Deckel 19b befestigt. Nun kann die Kolbenrückdruckfeder 12 über eine Führung am Deckel 19b geschoben, der Federteller 11 mit dem Kolbenrohr 23 verschraubt, der Kolben 1 eingelegt und der Zylinder 19a aufgesetzt werden. Anschließend wird eine Baugruppe mit der Spindel 24 und dem Joch 20 in die Nachstelleinheit eingeschraubt und ein bereits am Joch 20 montierter Faltenbalg 29 am Deckel 19b befestigt.

Im Folgenden soll die Funktion des Bremszylinders 18 beschrieben werden:
Durch eine Erhöhung des pneumatischen Drucks im Druckraum 17 wird der Kolben 1 nach links gedrückt. Dabei betätigt er das Kolbenrohr 23 und drückt dieses ebenfalls entgegen der Kraft der Kolbenrückdruckfeder 12 nach links. Die durch die Verriegelungsfeder 13 vorgespannte Steuerhülse 3 wird mit ihrer Innenverzahnung 7 auf die Außenverzahnung 14 der Verstellmutter 25 gedrückt und bewegt sich zusammen mit Kolbenrohr 23, Spindel 24, Verstellmutter 25 und Joch 20 ebenfalls nach links. Die Kolbenrohrverzahnung 15 ist dagegen nicht in Eingriff mit der Außenverzahnung 14 der Verstellmutter 25. Dieser Zustand ist in Fig. 2 dargestellt. In diesem Zustand wird von der Spindel 24 ein Drehmoment auf die Verstellmutter 25 ausgeübt. Dieses Drehmoment wird auf die Steuerhülse 3 und von dort über die Gleitsteine 8 auf das Gehäuse 19 übertragen.

In dem Moment, in dem sich die Steuerhülse 3 soweit nach links verschoben hat, dass sich der Einstellhub 10 zwischen den Gleitsteinen 8 und der Begrenzung der Gleitkanäle schließt, kommen die hier nicht gezeigten Bremsbeläge an der Bremsscheibe zur Anlage. Ab diesem Zeitpunkt wird über das Joch 20 ein Gegendruck aufgebaut. Da sich der Einstellhub 10 jetzt geschlossen hat, kann die Steuerhülse 3 an einer weiteren Bewegung des Kolbenrohrs 23 nicht mehr teilnehmen.

Das Kolbenrohr 23 wird nun um einen geringen Betrag weiter nach links, entgegen der Kraft der Kegelfeder 28, verschoben, während das Joch 20, Spindel 24 und Verstellmutter 25 an gleicher Stelle verharren. Durch diese Verschiebung des Kolbenrohrs 23 gegenüber der Verstellmutter 25 kommt die Außenverzahnung 14 der Verstellmutter 25 außer Eingriff mit der Innenverzahnung 7 der Steuerhülse 3. Gleichzeitig kommt die Außenverzahnung 14 jedoch in Eingriff mit der Kolbenrohrverzahnung 15.

Bei weiterem Druckaufbau im Druckraum 17 werden die Bremsbeläge gegen die Bremsscheibe gepresst, wobei das Kolbenrohr 23 mit großer Kraft gegen die Verstellmutter 25 gedrückt wird. Durch diese gegeneinander gerichteten Kräfte von Kolben 1 und Kolbenrohr 23 auf der einen Seite, sowie Joch 20, Spindel 24 und Verstellmutter 25 auf der anderen Seite, wird ein Drehmoment auf die Verstellmutter 25 ausgeübt. Dieses Drehmoment wird durch die Kolbenrohrverzahnung 15 aufgenommen und auf das Kolbenrohr 23 übertragen. Von den Langlöchern 27 in dem Kolbenrohr 23 wird das Drehmoment auf die Gleitsteine 8 übertragen. Über die Gleitsteine 8 geht das Drehmoment auf das Gehäuse 19 über. Das Gehäuse 19 ist über die Befestigungen 21 so mit der Bremszange verbunden, dass das Drehmoment hier endgültig aufgefangen wird. Dieser Zustand von Kolbenrohr 23, Verstellmutter 25 und Steuerhülse 3 ist in Fig. 3 dargestellt.

Beim Lösen der Bremse löst sich auch die Kolbenrohrverzahnung 15 wieder von der Außenverzahnung 14 der Verstellmutter 25. Gleichzeitig kommt die Außenverzahnung 14 der Verstellmutter 25 wieder in Eingriff mit der Innenverzahnung 7 der Steuerhülse 3.

Während also bei einem normalen Bremsvorgang keine Drehung der Verstellmutter 25 zugelassen wird, muss sich die Verstellmutter 25 drehen können, wenn eine Nachstellung aufgrund einer Abnutzung von Bremsbelägen und/oder Bremsscheibe notwendig wird. Hat ein gewisser Verschleiß der Bremsbeläge stattgefunden, hat sich auch der Spalt zwischen Bremsbelägen und Bremsscheibe vergrößert. Es ist folglich ein größerer Kolbenhub notwendig, um die Bremsbeläge wieder in Anlage an die Bremsscheibe zu bringen.

Die Einleitung des Bremsvorgangs erfolgt wie bei einer normalen Bremsung. Kolben 1, Kolbenrohr 23 und Steuerhülse 3 bewegen sich zusammen nach links. Die Steuerhülse 3 nimmt an dieser Bewegung teil bis der Einstellhub 10 geschlossen ist. Nun wird die Innenverzahnung 7 der Steuerhülse 3 von der Außenverzahnung 14 der Verstellmutter 25 entkoppelt. Gegenüber einem normalen Bremsvorgang wird nun jedoch kein Gegendruck aufgebaut, da sich die Bremsbeläge noch nicht in Anlage an der Bremsscheibe befinden.

Folglich koppelt die Kolbenrohrverzahnung 15 noch nicht in die Außenverzahnung 14 der Verstellmutter 25 ein. Über die Kegelfeder 28 wird auf Joch 20 und Spindel 24 eine Kraft ausgeübt, die versucht, die Spindel 24 nach links aus dem Kolbenrohr 23 herauszuziehen. Dabei wirkt auf die Verstellmutter 25 ein Drehmoment ein. Da die Außenverzahnung 14 der Verstellmutter 25 in diesem Zustand weder mit der Innenverzahnung 7 der Steuerhülse 3 noch mit der Kolbenrohrverzahnung 15 gekoppelt ist, kann die Verstellmutter 25 dem Drehmoment nachgeben und rotiert auf der Spindel 24. Durch diese Drehung der Verstellmutter 25 kann die Spindel 24 relativ zu der Verstellmutter 25 nach links herausgezogen werden.

Die Drehung der Verstellmutter 25 hält so lange an, bis die Bremsbeläge in Anlage an die Bremsscheibe gekommen sind. In diesem Moment wird wiederum ein Gegendruck aufgebaut, der eine Kopplung der Kolbenrohrverzahnung 15 mit der Außenverzahnung 14 der Verstellmutter 25 bewirkt. Das auf die Verstellmutter 25 wirkende Drehmoment wird nun wieder über das Kolbenrohr 23 direkt in die fest mit dem Gehäuse 19 verbundenen Gleitsteine 8 eingeleitet. Der Nachstellvorgang ist damit abgeschlossen und weitere Bremsvorgänge finden solange wieder ohne Nachstellung statt, bis erneut ein bestimmter Verschleiß der Bremsbeläge aufgetreten ist.

Ist eine Nachstellung nicht mehr möglich, müssen die Bremsbeläge gewechselt werden. Dabei muss auch der Bremszylinder 18 wieder in seinen ursprünglichen Zustand zurückversetzt werden. Hierzu wird an dem Rückstellsechskant 22 angesetzt und die Spindel 24 wieder vollständig in das Kolbenrohr 23 hineingedreht. Bei dem ersten Bremsvorgang, nach der Montage der neuen Bremsbeläge, findet wiederum eine Nachstellung statt, so dass sich auch hier der vorbestimmte Abstand zwischen Bremsbelägen und Bremsscheibe automatisch richtig einstellt.

### Bezugszeichenliste:

- 1: Kolben
- 2: Dichtring
- 3: Steuerhülse
- 4: Gleithülse
- 5: Gleitkanal
- 6: Kupplungsring
- 7: Innenverzahnung
- 8: Gleitstein
- 9: Befestigungsbohrung
- 10: Einstellhub
- 11: Federteller
- 12: Kolbenrückdruckfeder
- 13: Verriegelungsfeder
- 14: Außenverzahnung der Verstellmutter
- 15: Kolbenrohrverzahnung
- 16: Gleitband
- 17: Druckraum
- 18: Bremszylinder
- 19: Gehäuse
- 19a: Zylinder
- 19b: Deckel
- 20: Joch
- 21: Befestigung für Bremszange
- 22: Rückstellsechskant
- 23: Kolbenrohr
- 24: Spindel
- 25: Verstellmutter
- 26: Tellerfeder
- 27: Langloch
- 28: Kegelfeder
- 29: Faltenbalg

## Patentansprüche

1. Pneumatischer Bremszylinder mit einem Gehäuse (19), mit einem in dem Gehäuse (19) bewegbaren Kolben (1) zur Übertragung des pneumatischen Drucks auf eine Bremse und mit einer Einrichtung zum automatischen Nachstellen bei einem Verschleiß von Bremsbelägen, die eine Spindel (24), eine Verstellmutter (25) und ein mit der Verstellmutter (25) in Eingriff bringbares Kolbenrohr (23) aufweist, wobei nur zum Nachstellen eine Drehung der Verstellmutter (25) zugelassen wird, **dadurch gekennzeichnet, dass** ein von der Verstellmutter (25) auf das Kolbenrohr (23) aufgebrachtes Drehmoment von dem Kolbenrohr (23) direkt in fest mit dem Gehäuse (19) verbundene Elemente (8) eingeleitet wird.

2. Pneumatischer Bremszylinder nach Anspruch 1, **dadurch gekennzeichnet, dass** die fest mit dem Gehäuse (19) verbundenen Elemente als Gleitsteine (8) ausgebildet sind.

3. Pneumatischer Bremszylinder nach Anspruch 2, **dadurch gekennzeichnet, dass** die Gleitsteine (8) in Langlöchern (27) des Kolbenrohrs (23) gleiten.

4. Pneumatischer Bremszylinder nach Anspruch 1, **dadurch gekennzeichnet, dass** der Kolben (1) lose in den Bremszylinder (18) eingelegt ist und keine feste Verbindung mit dem Kolbenrohr (23) aufweist.

5. Pneumatischer Bremszylinder nach Anspruch 4, **dadurch gekennzeichnet, dass** der Kolben (1) als Tiefziehteil aus Stahl gefertigt ist.

6. Pneumatischer Bremszylinder nach Anspruch 5, **dadurch gekennzeichnet, dass** auf den Rand des Kolbens (1) ein Dichtring (2) aufvulkanisiert ist.

7. Pneumatischer Bremszylinder nach Anspruch 1, **dadurch gekennzeichnet, dass** die Verstellmutter (25) an einer Stirnseite eine schräge Außenverzahnung (14) aufweist.

8. Pneumatischer Bremszylinder nach Anspruch 7, **dadurch gekennzeichnet, dass** das Kolbenrohr (23) über eine Kolbenrohrverzahnung (15) mit der Außenverzahnung (14) der Verstellmutter (25) in Eingriff bringbar ist.

9. Pneumatischer Bremszylinder nach Anspruch 3, **dadurch gekennzeichnet, dass** in dem Kolbenrohr (23) eine Steuerhülse (3) angeordnet ist.

10. Pneumatischer Bremszylinder nach Anspruch 9, **dadurch gekennzeichnet, dass** die Gleitsteine (8) mit ihrem freien Ende in Gleitkanäle (5) der Steuerhülse (3) eingreifen.

11. Pneumatischer Bremszylinder nach Anspruch 10, **dadurch gekennzeichnet, dass** die Gleitkanäle (5) so dimensioniert sind, dass sie als Anschlag für die Gleitsteine (8) wirken und eine Axialbewegung der Steuerhülse (3) beschränken.

12. Pneumatischer Bremszylinder nach Anspruch 9, **dadurch gekennzeichnet, dass** die Steuerhülse (3) als Verbundteil mit einer Gleithülse (4) aus Kunststoff und einem eingespritzten Kupplungsring (6) aus Metall gefertigt ist.

13. Pneumatischer Bremszylinder nach den Ansprüchen 7 und 12, **dadurch gekennzeichnet, dass** der Kupplungsring (6) an seinem freien Ende eine schräge Innenverzahnung (7) aufweist, die mit der Außenverzahnung (14) der Verstellmutter (25) in Eingriff bringbar ist.

## Claims

1. Pneumatic brake cylinder comprising a housing (19), a piston (1) which can be moved in the housing (19) for transmitting the pneumatic pressure to a brake, and a device for automatic adjustment in the case of wear of brake pads, which device comprises a spindle (24), an adjusting nut (25) and a piston tube (23) which can be brought into engagement with the adjusting nut (25), wherein a rotation of the adjusting nut (25) is only permitted for adjustment, **characterised in that** a torque which is applied by the adjusting nut (25) to the piston tube (23) is introduced by the piston tube (23) directly into elements (8) which are connected fixedly to the housing (19).

2. Pneumatic brake cylinder according to claim 1, **characterised in that** the elements which are connected fixedly to the housing (19) are configured as sliding blocks (8).

3. Pneumatic brake cylinder according to claim 2, **characterised in that** the sliding blocks (8) slide in slots (27) of the piston tube (23).

4. Pneumatic brake cylinder according to claim 1, **characterised in that** the piston (1) is inserted loosely into the brake cylinder (18) and has no fixed connection to the piston tube (23).

5. Pneumatic brake cylinder according to claim 4, **characterised in that** the piston (1) is produced as a deep drawn part made from steel.

6. Pneumatic brake cylinder according to claim 5, **characterised in that** a sealing ring (2) is vulcanised onto the edge of the piston (1).

7. Pneumatic brake cylinder according to claim 1, **characterised in that** the adjusting nut (25) has an oblique external toothing system (14) at one end face.

8. Pneumatic brake cylinder according to claim 7, **characterised in that** the piston tube (23) can be brought into engagement via a piston tube toothing system (15) with the external toothing system (14) of the adjusting nut (25).

9. Pneumatic brake cylinder according to claim 3, **characterised in that** a control sleeve (3) is arranged in the piston tube (23).

10. Pneumatic brake cylinder according to claim 9, **characterised in that** the sliding blocks (8) engage with their free end into sliding channels (5) of the control sleeve (3).

11. Pneumatic brake cylinder according to claim 10, **characterised in that** the sliding channels (5) are dimensioned in such a way that they act as a stop for the sliding blocks (8) and restrict an axial movement of the control sleeve (3).

12. Pneumatic brake cylinder according to claim 9, **characterised in that** the control sleeve (3) is produced as a composite part with a sliding sleeve (4) made from plastic and an injection-moulded coupling ring (6) made from metal.

13. Pneumatic brake cylinder according to claims 7 and 12" **characterised in that**, at its free end, the coupling ring (6) has an oblique internal toothing system (7) which can be brought into engagement with the external toothing system (14) of the adjusting nut (25).

## Revendications

1. Cylindre de frein pneumatique, comprenant une enveloppe (19), comprenant un piston (1) mobile dans l'enveloppe (19) pour la transmission de la pression pneumatique à un frein, et comprenant un dispositif de rattrapage automatique du jeu, s'il se produit une usure de garnitures de frein, dispositif qui a une broche (24), un écrou (25) de réglage et un tube (23) de piston pouvant être mis en prise avec l'écrou (25) de réglage, dans lequel une rotation de l'écrou (25) de réglage n'est autorisée que pour le rattrapage du jeu, **caractérisé en ce qu'**un couple de rotation appliqué au tube (23) de piston par l'écrou (25) de réglage est appliqué par le tube (23) de piston directement à des éléments (8) reliées de manière fixe à l'enveloppe (19).

2. Cylindre de frein pneumatique suivant la revendication 1, **caractérisé en ce que** les éléments reliés de manière fixe à l'enveloppe (19) sont constitués sous la forme de clavettes (8).

3. Cylindre de frein pneumatique suivant la revendication 2, **caractérisé en ce que** les clavettes (8) glissent dans des boutonnières (27) du tube (23) de piston.

4. Cylindre de frein pneumatique suivant la revendication 1, **caractérisé en ce que** le piston (1) est inséré de manière lâche dans le cylindre (18) de frein et n'a pas de liaison fixe avec le tube (23) de piston.

5. Cylindre de frein pneumatique suivant la revendication 4, **caractérisé en ce que** le piston (1) est fabriqué sous la forme d'une pièce à emboutissage profond en acier.

6. Cylindre de frein pneumatique suivant la revendication 5, **caractérisé en ce qu'**une bague (2) d'étanchéité est vulcanisée sur le bord du piston (1).

7. Cylindre de frein pneumatique suivant la revendication 1, **caractérisé en ce que** l'écrou (25) de réglage a, du côté frontal, une denture (14) extérieure inclinée.

8. Cylindre de frein pneumatique suivant la revendication 7, **caractérisé en ce que** le tube (23) de piston peut être mis en prise avec la denture (14) extérieure de l'écrou (25) de réglage par une denture (15) du tube de piston.

9. Cylindre de frein pneumatique suivant la revendication 3, **caractérisé en ce qu'**un manchon (3) de commande est disposé dans le tube (23) de piston.

10. Cylindre de frein pneumatique suivant la revendication 9, **caractérisé en ce que** les clavettes (8) pénètrent par leur extrémité libre dans des canaux (5) de glissement du manchon (3) de commande.

11. Cylindre de frein pneumatique suivant la revendication 10, **caractérisé en ce que** les canaux (5) de glissement ont des dimensions telles qu'ils agissent comme butée pour les clavettes (8) et limitent un mouvement axial du manchon (3) de commande.

12. Cylindre de frein pneumatique suivant la revendication 9, **caractérisé en ce que** le manchon (3) de commande est fabriqué sous la forme d'une pièce composite ayant un manchon (4) glissant en matière plastique et une bague (6) d'accouplement injectée en métal.

13. Cylindre de frein pneumatique suivant les revendications 7 et 12, **caractérisé en ce que** la bague (6) d'accouplement a, à son extrémité libre, une denture (7) intérieure inclinée, qui peut être mise en prise avec la denture (14) extérieure de l'écrou (25) de réglage.
